# EUROPEAN PATENT SPECIFICATION

(11) **EP 4 417 711 B1**
(45) Date of publication and mention of the grant of the patent: **02.12.2026**
(21) Application number: 22881099.0
(22) Date of filing: 14.10.2022
(51) Int. Cl.: C21B 13/00, F27D 17/00, C21B 13/02

(54) **METHOD FOR PRODUCING REDUCED IRON**
VERFAHREN ZUR HERSTELLUNG VON REDUZIERTEM EISEN
PROCÉDÉ DE PRODUCTION DE FER RÉDUIT

(30) Priority: 14.10.2021 JP 2021168721
(43) Date of publication of application: 21.08.2024
(73) Proprietor: NIPPON STEEL CORPORATION, Chiyoda-ku Tokyo 100-8071 (JP)
(72) Inventor: MIZUTANI, Moritoshi, Tokyo 100-8071 (JP)
(74) Representative: Vossius & Partner Patentanwälte Rechtsanwälte mbB
(86) International application number: PCT/JP2022/038301
(87) International publication number: WO 2023/063404

(56) References cited:
- EP-B1- 2 459 755
- CN-A- 110 562 913
- JP-A- 2011 140 694
- JP-A- S5 681 609
- JP-A- S54 126 618
- JP-A- S59 123 708
- US-A1- 2009 211 401
- US-A1- 2018 371 560

## Description

### [Technical Field]

The present invention relates to a method for producing direct reduction iron.

Priority is claimed on Japanese Patent Application No. 2021-168721, filed October 14, 2021

A direct reduction ironmaking method is known as one of ironmaking methods for obtaining iron from raw materials containing iron oxide (reducing iron oxide). The direct reduction ironmaking method has continued to develop based on the background such as low construction cost of plants for performing this method, ease of operation, and operability in small-scale plants. Particularly, in the shaft furnace type direct reduction ironmaking method, various improvements have been made to effectively utilize the reducing gas in the furnace.

In addition, a method for producing iron carbide by adding a step of carbonizing direct reduction iron in order to prevent reoxidation when direct reduction iron is transported is also known. Iron carbide also has an advantage of reducing energy consumption when melted in an electric furnace.

For example, Patent Documents 1 and 2 describe a method for reducing and carburizing iron ores in a fluid bed type direct direct reduction iron making method, and specify the composition, temperature, and pressure of a reducing gas. Patent Document 3 describes a method for reducing and carburizing iron ores in a shaft furnace type direct direct reduction ironmaking method, and specifies the composition, temperature, and pressure of a reducing gas. Patent documents 4-6 further disclose a method for producing DRI with exhaust gas recycling.

Generally, the decomposition reaction of CH₄ (methane gas) is an endothermal reaction, and proceeds more easily at a high temperature and high pressure. For example, in the atmospheric pressure MIDREX method, the temperature of the reducing gas is increased by enriching with O₂ when a reducing gas is heated, and an increase in the C concentration of the direct reduction iron is intended. In addition, it is known that the C concentration of direct reduction iron is higher in the high pressure HYL (ENERGIRON) method than in the MIDREX method. (MIDREX method: the C concentration of direct reduction iron being 0.5 to 2.5%, ENERGIRON method: 2.0 to 4.5%)

In addition, recently, ACT (registered trademark) (Adjustable Carbon Technology) has been developed in order to improve the C concentration of direct reduction iron in the MIDREX method (Non-Patent Document 1). In this process, a part of a natural gas reformed with a reformer is subjected to cooling/compression/membrane separation, and thus the natural gas is separated into a CO-rich gas and a H₂-rich gas. Then, the H₂-rich gas is returned to a process gas (that is, blown into a reduction zone), the CO-rich gas is mixed with a natural gas and blown into a transition zone, and thus the C concentration of the direct reduction iron is improved and controlled.

### [Citation List]

### [Patent Document]

[Patent Document 1]
   Japanese Unexamined Patent Application, First Publication No. H11-343512
[Patent Document 2]
   Japanese Unexamined Patent Application, First Publication No. H5-222423
[Patent Document 3]
   Japanese Unexamined Patent Application, First Publication No. H8-120314
[Patent Document 4]
   EP 2 459 755 B1
[Patent Document 5]
   US 2018/371560 A1
[Patent Document 6]
   US 2009/211401 A1

### [Non-Patent Document]

[Non-Patent Document 1] http://www.midrex.com/wp-content/uploads/MIDREX-ACT-fpo-Brochure.pdf, published in September 2017
[Non-Patent Document 2]
   Mizutani et al.: CAMP-ISIJ, 33(2020), 483.

### [Summary of the Invention]

### [Problems to be Solved by the Invention]

On the other hand, recently, in order to reduce the carbon dioxide emission amount from the steel industry, the development of direct reduction ironmaking methods in which hydrogen gas is used as a reducing gas has progressed. As typical examples, HYBRIT and MIDREX+H₂ in which hydrogen gas obtained by water electrolysis is used in a shaft furnace type direct reducion ironmaking method are known. However, since hydrogen gas is used as the reducing gas in these processes, the direct reduction iron cannot be carburized, and a large amount of energy is required for a melting treatment in an electric furnace.

Therefore, an object of the present invention is to provide a novel and improved method for producing direct reduction iron in which it is possible to carburize direct reduction iron even when a reducing gas containing hydrogen gas is used as a reducing gas in a shaft furnace.

### [Means for Solving the Problem]

In order to achieve the above object, the gist of the present invention is as follows.
(1) A method for producing direct reduction iron according to Aspect 1 of the present invention includes:
   a reduction step in which an iron oxide raw material is reduced by a reducing gas containing hydrogen gas to generate direct reduction iron;
   a dehydration step in which water is removed from an exhaust gas in the reduction step and thus hydrogen gas is separated from the exhaust gas;
   a cooling step in which the direct reduction iron is carbonized and cooled using a cooling gas containing carbon as an element; and
   a separation step in which hydrogen gas and methane gas are separated from an exhaust gas in the cooling step,
   wherein the cooling gas is methane gas,
   wherein the reducing gas further contains the hydrogen gas separated in the dehydration step and the hydrogen gas separated in the separation step,
   wherein the cooling gas further contains the methane gas separated in the separation step.
(2) A method for producing direct reduction iron according to Aspect 2 of the present invention includes:
   a reduction step in which an iron oxide raw material is reduced by a reducing gas containing hydrogen gas to generate direct reduction iron;
   a dehydration step in which water is removed from an exhaust gas in the reduction step and thus hydrogen gas is separated from the exhaust gas;
   a cooling step in which the direct reduction iron is carbonized and cooled using a cooling gas containing carbon as an element; and
   a separation step in which CO gas and CO₂ are separated from an exhaust gas in the cooling step,
   wherein the cooling gas contains CO gas,
   wherein the reducing gas contains the hydrogen gas separated in the dehydration step, and
   wherein the cooling gas further contains the CO gas separated in the separation step.
(3) Aspect 3 of the present invention further includes a carbon gasification step in which CO gas is produced by gasifying char or coke with CO₂ gas in the method for producing direct reduction iron according to Aspect 2,
   wherein the CO₂ gas provided in the carbon gasification step includes the CO₂ gas separated in the separation step, and
   wherein the cooling gas is the CO gas produced in the carbon gasification step.
(4) A method for producing direct reduction iron according to Aspect 4 of the present invention includes:
   a reduction step in which an iron oxide raw material is reduced by a reducing gas containing hydrogen gas to generate direct reduction iron;
   a dehydration step in which water is removed from an exhaust gas in the reduction step and thus hydrogen gas is separated from the exhaust gas;
   a cooling step in which the direct reduction iron is carbonized and cooled using a cooling gas containing carbon as an element;
   a second dehydration step in which water is separated from an exhaust gas in the cooling step;
   a coal carbonization step in which coal is carbonized to produce a coal carbonizing gas; and
   a single or plurality of separation steps in which hydrogen gas, a mixed gas containing CO gas and methane gas, and CO₂ gas are separated from the exhaust gas after the second dehydration step and the coal carbonizing gas,
   wherein the reducing gas further contains the hydrogen gas separated in the dehydration step and the hydrogen gas separated in the separation step,
   wherein the cooling gas is the mixed gas separated in the separation step, and
   wherein, in the coal carbonization step, the coal carbonizing gas is produced using the CO₂ gas separated in the separation step.
(5) In Aspect 5 according to the present invention, in the method for producing direct reduction iron according to Aspect 1 to Aspect 4,
   a shaft furnace including, in order from a bottom, a direct reduction iron discharging unit that discharges the carbonized and cooled direct reduction iron to the bottom, a cooling gas inlet, a cooling gas outlet, a reducing gas inlet, a reducing gas outlet and a raw material charging unit that charges a raw material, which is the iron oxide, to a top is used,
   in the reduction step, in a reduction zone between the reducing gas inlet and the reducing gas outlet, the raw material is reduced with the reducing gas to generate the direct reduction iron, and
   in the cooling step, in a cooling zone between the cooling gas inlet and the cooling gas outlet, the direct reduction iron is carbonized and cooled using the cooling gas.

### [Effects of the Invention]

According to the above aspects, even when a reducing gas containing hydrogen gas is used as a reducing gas in a shaft furnace, it is possible to carburize direct reduction iron.

### [Brief Description of Drawings]

FIG. 1 is a flowchart illustrating a method for producing direct reduction iron according to a first embodiment of the present invention.
FIG. 2 is a flowchart illustrating a method for producing direct reduction iron according to a second embodiment of the present invention.
FIG. 3 is a flowchart illustrating a method for producing direct reduction iron according to a third embodiment of the present invention.
FIG. 4 is a flowchart illustrating a method for producing direct reduction iron according to a fourth embodiment of the present invention.
FIG. 5 is a flowchart showing an example of a direct reduction system according to the present embodiment.

### [Embodiment(s) for implementing the Invention]

Hereinafter, the present embodiment will be described in detail with reference to the drawings. Here, when a numerical value range is expressed using "to," the range includes both stated numerical values.

### <1. Method for producing direct reduction iron>

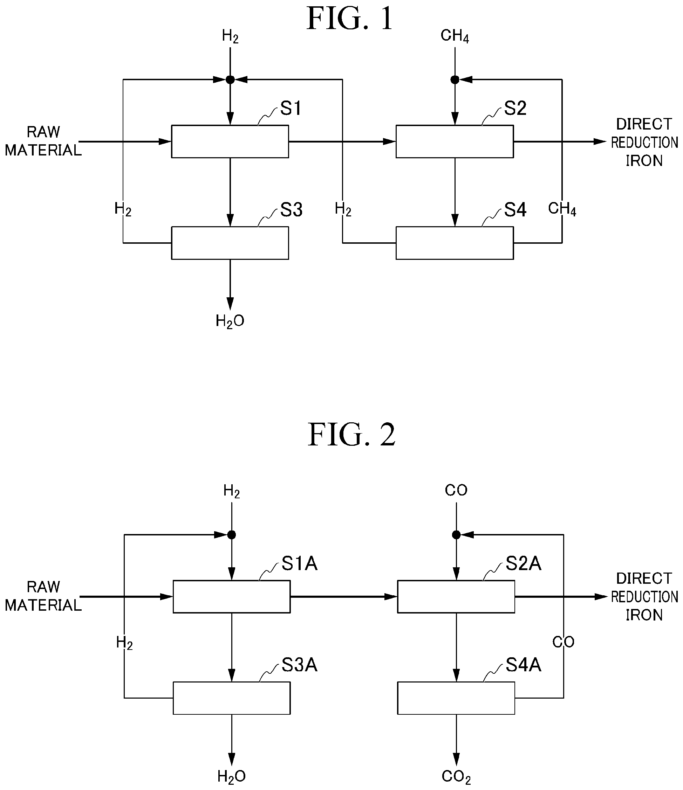

Hereinafter, a method for producing direct reduction iron of the present invention will be described with reference to FIG. 1 to FIG. 4.

The present invention provides a method for producing direct reduction iron in which partially carbonized direct reduction iron is produced using iron oxide as a raw material, which has a basic configuration including a reduction step S1 in which an iron oxide raw material is reduced by hydrogen gas as a reducing gas to generate direct reduction iron, a dehydration step S3 in which water is removed from an exhaust gas (reduced exhaust gas) in the reduction step S1 and thus hydrogen gas is separated from the exhaust gas, a cooling step S2 in which the direct reduction iron generated in the reduction step S1 is partially carbonized and cooled using a gas containing carbon as an element as a cooling gas, and a separation step S4 in which at least a gas containing carbon is separated from the exhaust gas (cooling exhaust gas) in the cooling step S2.

The target raw materials in the present invention are iron ores mainly composed of iron oxide and pellets processed therefrom. Those used in an existing direct reduction process may be used and do not require any particular pretreatment.

According to the present invention, it is possible to produce partially carburized direct reduction iron even when direct reduction is used with hydrogen gas. In addition, since the separated gas is circulated, efficient gas usage can be achieved.

As will be described below, the present invention can be defined as various methods for producing direct reduction iron in consideration of the type of a cooling gas, the presence of an in-system production step for hydrogen gas and CO gas, and a difference in gas generation methods. Here, from a practical point of view, as a gas containing carbon as an element, methane gas, CO gas or a mixture of both gases is used, but higher hydrocarbons such as propane can also be used.

### (Method for producing direct reduction iron according to first embodiment)

A method for producing direct reduction iron according to a first embodiment (FIG. 1) includes a reduction step S1 in which an iron oxide raw material is reduced by hydrogen gas to generate direct reduction iron, a dehydration step S3 in which water is removed from an exhaust gas in the reduction step S1 and thus hydrogen gas is separated from the exhaust gas, a cooling step S2 in which the direct reduction iron is carbonized and cooled using methane gas, and a separation step S4 in which hydrogen gas and methane gas are separated from the exhaust gas in the cooling step S2, wherein the hydrogen gas separated in the dehydration step S3, the hydrogen gas separated in the separation step S4 and the methane gas separated in the separation step S4 are circulated as a reducing gas and a cooling gas, respectively.

In the reduction step S1, iron oxide is reduced to direct reduction iron using hydrogen gas. Hydrogen gas is supplied from a reservoir (for example, a gas tank). In the reduction step S1, the reducing gas further contains the hydrogen gas separated in the dehydration step S3 and the hydrogen gas separated in the separation step S4 in addition to the hydrogen gas supplied from the outside (for example, a gas tank). Hydrogen gas may be mixed with other types of gas (for example, nitrogen gas, CO gas, CH₄ gas, etc.) within a range in which effects of the present embodiment are not obstructed. The temperature of hydrogen gas supplied in the reduction step S1 is 700 to 1,000°C, and the supply amount is 1,000 to 2,200 Nm³/t-DRI (flow rate per ton of direct reduction iron (DRI)). The chemical reaction formula in the reduction step S1 is represented by Formula (1). The degree of metallization of the direct reduction iron (metallic iron concentration/total iron concentration×100) generated in the reduction step S1 is 65 to 98%. Here, the concentration of metallic iron is measured by a bromine methanol titration method for measuring metallic iron in direct reduction iron ISO 5416 and the total iron concentration is measured by JIS M 8212:2005 iron ore-determination of total iron content.

Fe₂O₃+3H₂→2Fe+3H₂O (1)

Hydrogen gas becomes water (water vapor) by reaction with iron oxide, and thus the reduced exhaust gas discharged in the reduction step S1 is composed of water vapor and unreacted hydrogen gas. The reduced exhaust gas is a gas discharged after the reduction reaction in the reduction step S1.

In the reduced exhaust gas, water is removed in the dehydration step S3, and hydrogen is separated. In the dehydration step S3, when the reduced exhaust gas is cooled to a dew point thereof or less, steam is separated into unreacted hydrogen gas and water. Water is discharged to the outside of the system. The unreacted hydrogen gas is circulated as a reducing gas.

In the cooling step S2, the direct reduction iron generated in the reduction step S1 is cooled with methane gas. This methane gas is, for example, a gas derived from a natural gas. The cooling gas further contains the methane gas separated in the separation step S4 in addition to the methane gas supplied from the outside (a liquefied natural gas tank). Methane gas may be mixed with other types of gases within a range in which effects of the present embodiment are not obstructed. Methane gas is supplied from a reservoir (for example, a liquefied natural gas tank). The temperature of methane gas when introduced in the cooling step S2 is 0 to 100°C, and the blowing amount is more than 0 Nm³/t-DRI and 400 Nm³/t-DRI or less. In the cooling step S2, the direct reduction iron is cooled and carbonized with methane gas. The chemical reaction formula in this case is represented by the following Formula (2). The degree of metallization of the direct reduction iron is 70 to 98%, the amount of carbon contained in the direct reduction iron based on the total mass of the direct reduction iron is more than 0 Nm³/t-DRI and 4.5 mass% or less. The volume ratio of the methane gas separated in the separation step S4 based on the total volume of the cooling gas is, for example, 45 vol% to 55 vol%. The volume ratio of methane gas newly introduced from the outside based on the total volume of the cooling gas is 45 vol% to 55 vol%.

3Fe+CH₄→Fe₃C+2H₂ (2)

Since methane gas becomes hydrogen gas by a reaction with direct reduction iron, the cooling exhaust gas discharged in the cooling step S2 is composed of hydrogen gas and unreacted methane gas. The cooling exhaust gas is a gas discharged after cooling in the cooling step S2.

In the separation step S4, at least hydrogen gas is separated from the exhaust gas (cooling exhaust gas) in the cooling step S2. Specifically, in the separation step S4, the exhaust gas in the cooling step S2 is separated into hydrogen gas and methane gas. For example, a membrane separation method can be used for separation. During membrane separation, the pressure is 1.0 to 2.0 MPa, and the temperature is 0 to 100°C. The separated methane gas is circulated as a cooling gas, and hydrogen gas (H₂) is circulated as a reducing gas. If H₂ is not separated in the separation step, the H₂ concentration in the cooling step increases, and the rate of the carburization reaction with CH₄ decreases. Thereby, the carbon concentration (C concentration) of the direct reduction iron decreases. In addition, when the separated H₂ is circulated as a reducing gas, it is possible to reduce the amount of H₂ introduced from the outside in the reduction step. Thereby, it is possible to reduce costs.

The concentration of the separated hydrogen gas is preferably 95 vol% or more. The upper limit of the concentration of the separated hydrogen gas is not particularly limited, and may be 100 vol%. The concentration of the separated methane gas is preferably 95 vol% or more.

The upper limit of the concentration of the separated methane gas is not particularly limited, and may be 100 vol%.

In the method for producing direct reduction iron according to the first embodiment, methane gas is used as the cooling gas, unlike other methods to be described below. According to the method for producing direct reduction iron according to the first embodiment, since methane gas can be decomposed in the cooling step S2, a conventional reforming step for producing a reducing gas can be omitted, and a reducing gas can be efficiently obtained.

### (Method for producing direct reduction iron according to second embodiment)

A method for producing direct reduction iron according to a second embodiment (FIG. 2) includes a reduction step S1A in which an iron oxide raw material is reduced by hydrogen gas to generate direct reduction iron, a dehydration step 3A in which water is removed from an exhaust gas in the reduction step S1A and thus hydrogen gas is separated from the exhaust gas, a cooling step S2A in which the direct reduction iron generated in the reduction step S1A is carbonized and cooled using CO gas, and a separation step S4A in which a cooling exhaust gas discharged in the cooling step S2A is separated into CO gas and CO₂ gas, wherein the hydrogen gas separated in the dehydration step 3A and the CO gas separated in the separation step S4A are circulated as a reducing gas and a cooling gas, respectively.

In the method for producing direct reduction iron according to the second embodiment, hydrogen gas and CO gas are supplied from the outside and stored in a reservoir and then used. For hydrogen gas and CO gas, a coal gas obtained by coal gasification can also be used by being separated into hydrogen gas and CO gas. Coal gasification is a method in which coal is decomposed using a small amount of oxygen to obtain hydrogen gas and CO gas.

The reduction step S1A and the dehydration step 3A in the method for producing direct reduction iron according to the second embodiment are the same as those in the method for producing direct reduction iron according to the first embodiment.

In the cooling step S2A in the method for producing direct reduction iron according to the second embodiment, the direct reduction iron generated in the reduction step S1A is cooled with CO gas, which is a cooling gas. The cooling gas further contains the CO gas separated in the separation step S4A in addition to the CO gas supplied from the outside. CO gas may be mixed with other types of gases within a range in which effects of the present embodiment are not obstructed. CO gas is supplied from a reservoir (for example, a gas tank). The temperature of CO gas when introduced in the cooling step S2A is 0 to 100°C, and the blowing amount is more than 0 Nm³/t-DRI and 400 Nm³/t-DRI or less. In the cooling step S2A, the direct reduction iron is cooled and carbonized with CO gas. The chemical reaction formula in this case is represented by the following Formula (3). The degree of metallization of the direct reduction iron is 70 to 98%, and the amount of carbon contained in the direct reduction iron based on the total mass of the direct reduction iron is more than 0 mass% and 4.5 mass% or less. The volume ratio of the CO gas separated in the separation step S4A based on the total volume of the cooling gas is preferably 45 vol% to 55 vol%. In the cooling step S2A, the volume ratio of CO gas newly introduced from the outside based on the total volume of the cooling gas is preferably 45 vol% to 55 vol%.

Fe+2CO→FeC+CO₂ (3)

Since CO gas becomes CO₂ by a reaction with direct reduction iron, the cooling exhaust gas discharged in the cooling step S2A is composed of CO₂ gas and unreacted CO gas.

In the separation step S4A in the method for producing direct reduction iron according to the second embodiment, the exhaust gas in the cooling step S2A is separated into CO gas and CO₂ gas. For separation, for example, a chemical absorption method (https://www.course50.com/technology/technology02/) can be applied. The chemical absorption method is a method in which an alkaline aqueous solution (absorption liquid) such as an amine comes into contact with a CO₂-containing gas in an absorption tower or the like, CO₂ is selectively absorbed into the absorption liquid, the absorption liquid is then heated in a regeneration tower, and high-purity CO₂ is separated and recovered. CO gas separated in the separation step S4A is circulated as a cooling gas. On the other hand, handling of CO₂ gas separated in the separation step S4A is not particularly limited in the method for producing direct reduction iron according to the second embodiment.

The concentration of CO gas separated in the separation step S4A is preferably 99 mass% or more. The concentration of CO gas may be 100%. The concentration of CO₂ gas separated in the separation step S4A is preferably 99 mass% or more. The concentration of CO₂ gas may be 100%.

In the method for producing direct reduction iron according to the second embodiment, CO gas is used as the cooling gas, unlike the method for producing direct reduction iron according to the first embodiment. Since CO is separated and circulated in the separation step S4A, a cooling gas can be efficiently obtained.

When a coal gas obtained by coal gasification is separated into hydrogen gas and CO gas, which are used as hydrogen gas and CO gas supplied in the method for producing direct reduction iron according to the second embodiment, the ratio of hydrogen gas and CO gas in the coal gas can be adjusted by using oxygen gas and water vapor together as the decomposition gas in the coal gasification step. Therefore, according to requirements for the reducing gas and the cooling gas, all the required gases can be provided by coal gasification.

In the method for producing direct reduction iron according to the second embodiment, the ratio of hydrogen gas consumed in the reduction step S1A and CO gas consumed in the cooling step S2A is approximately 4:1. Therefore, when all the cooling CO gas is supplied from a water gas (a mixed gas in which hydrogen gas and CO gas obtained when coal is decomposed using only water vapor are mixed at a ratio of 1:1), a quarter of the reducing hydrogen gas is supplied from the water gas. For example, four direct reduction devices and one water gas production device may be provided based on the method for producing direct reduction iron according to the second embodiment. This configuration is an efficient facility configuration because it can supply reducing hydrogen gas for one device and cooling CO gas for all four devices.

### (Method for producing direct reduction iron according to third embodiment)

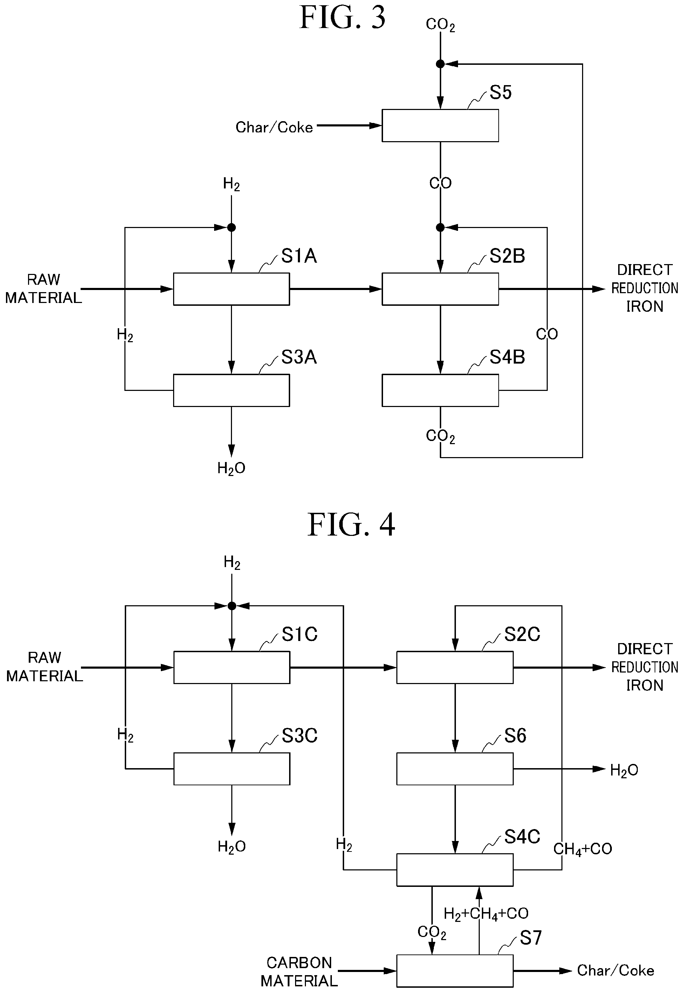

A method for producing direct reduction iron according to a third embodiment (FIG. 3) further includes a carbon gasification step S5 in which CO gas is produced by gasifying char or coke with CO₂ gas in the above method for producing direct reduction iron according to the second embodiment. The carbon gasification reaction is a reaction represented by Formula (4). When the carbon gasification reaction proceeds at 900°C or higher, the generated gas can generally be CO gas.

C+CO₂→2CO (4)

Here, it is desirable that char or coke to be gasified have a small residual volatile content so that hydrogen gas or water vapor that inhibits the carbonization reaction of direct reduction iron in a cooling step S2B is not generated. For CO₂ gas used during gasification, CO₂ gas separated in a separation step 4B is circulated, and the shortage is supplied from the reservoir. Then, the amount of CO₂ gas supplied from the reservoir in the carbon gasification step S5 is adjusted so that the cooling gas becomes CO gas produced in the carbon gasification step S5, that is, the amount of CO produced in the carbon gasification step S5 is made to match the amount of CO required as a cooling gas, and thus it is not necessary to introduce CO gas from the outside. The cooling exhaust gas discharged in the cooling step S2B is composed of CO₂ gas and unreacted CO gas.

During gasification, it is also possible to use oxygen gas together with CO₂ gas.

In the method for producing direct reduction iron according to the third embodiment, since the carbon gasification step S5 is added, no CO₂ gas is released outside the system, unlike the method for producing direct reduction iron according to the second embodiment. In addition, since the method for producing direct reduction iron according to the third embodiment has an effect of fixing CO₂ gas as a carbon content of iron carbide, using the recovered CO₂ gas as CO₂ gas supplied from the reservoir also contributes to limiting release of CO₂ gas.

### (Method for producing direct reduction iron according to fourth embodiment)

A method for producing direct reduction iron according to a fourth embodiment (FIG. 4) includes a reduction step S1C in which an iron oxide raw material is reduced by hydrogen gas to generate direct reduction iron, a dehydration step S3C in which water is removed from an exhaust gas in the reduction step S1C and thus hydrogen gas is separated from the exhaust gas, a cooling step S2C in which the direct reduction iron is carbonized and cooled using a cooling gas, which is a mixed gas containing CO gas and methane gas, a coal carbonization step S7 in which coal is carbonized to produce a coal carbonizing gas, another dehydration step (second dehydration step) S6 in which water is separated from the exhaust gas in the cooling step S2C, and a separation step 4C in which the dehydrated cooling exhaust gas and coal carbonizing gas are separated into hydrogen gas, a mixed gas containing CO gas and methane gas, and CO₂ gas. The separated hydrogen gas and mixed gas are circulated as some or all of the reducing gas and the cooling gas, respectively. In addition, CO₂ gas is used in the coal carbonization step S7.

The reduction step S1C and the dehydration step S3C in the method for producing direct reduction iron according to the fourth embodiment are the same as the reduction step S1 and the dehydration step S3 in the method for producing direct reduction iron according to the first embodiment.

In the cooling step S2C in the method for producing direct reduction iron according to the fourth embodiment, cooling with a mixed gas containing methane gas and CO gas is performed. The cooling gas is a mixed gas containing methane gas and CO gas separated in a separation step S4C. The temperature of the mixed gas when introduced in the cooling step S2C is 0 to 100°C, and the blowing amount is more than 0 Nm³/t-DRI and 400 Nm³/t-DRI or less. In the cooling step S2C, the direct reduction iron is cooled and carbonized with the mixed gas. In this case, the carbonization reactions of Formulae (2) and (3) proceed at the same time. The degree of metallization of the direct reduction iron is 70 to 98%, and the amount of carbon contained in the direct reduction iron based on the total mass of the direct reduction iron is more than 0 mass% and 4.5 mass% or less.

In addition, since oxygen and hydrogen coexist as elements in the cooling gas, water generation also proceeds in parallel, for example, according to Formula (4). The method for producing direct reduction iron according to the fourth embodiment includes another dehydration step (second dehydration step) S6 in which, in order to discharge this water out of the system, water is separated from the cooling exhaust gas.

CO₂+H₂→H₂O+CO (4)

In the separation step S4C, the cooling exhaust gas after the second dehydration step S6 and the coal carbonizing gas produced in the coal carbonization step S7 are separated into hydrogen gas, a mixed gas containing methane gas and CO gas, and CO₂ gas. The separation step S4C includes a single step or a plurality of steps in which the dehydrated cooling exhaust gas and coal carbonizing gas are separated. For separation, for example, a membrane separation method can be used. In a single step, the dehydrated cooling exhaust gas (the cooling exhaust gas after the second dehydration step S6) and coal carbonizing gas may be separated into hydrogen gas, mixed gas containing methane gas and CO gas and CO₂ gas. In a plurality of steps, the dehydrated cooling exhaust gas and coal carbonizing gas may be separated into hydrogen gas, a mixed gas containing methane gas and CO gas and CO₂ gas.

When separation is performed in a plurality of steps, in the first step, only CO₂ gas is separated from the dehydrated cooling exhaust gas and coal carbonizing gas. In the second step, CO gas is separated from the residual gas after CO₂ gas is separated (first residual gas). In the third step, methane gas is separated from the residual gas after CO gas is separated from the first residual gas (second residual gas). In the fourth step, methane gas is separated from the second residual gas and hydrogen gas is separated from the residual gas (third residual gas). CO gas and methane gas are mixed and used as a mixed gas. The separation method may be changed, for example, a chemical adsorption method is used for separating CO₂ gas in the first step, and a pressure fluctuation adsorption method is used for separation in the second step to the fourth step.

The coal carbonizing gas is, for example, a coke furnace gas. During membrane separation, the pressure is 1.0 to 2.0 MPa, and the temperature is 0 to 100°C. The separated mixed gas is circulated as a cooling gas, and hydrogen gas is circulated as a reducing gas. Regarding CO₂ gas, in the coal carbonization step S7, a coal carbonizing gas is produced using CO₂ gas separated in the separation step S4C.

The method for producing direct reduction iron according to the fourth embodiment further includes a coal carbonization step S7 in which coal is carbonized to produce a coal carbonizing gas in the method for producing direct reduction iron according to the first embodiment and the method for producing direct reduction iron according to the second embodiment. Coal carbonization is, for example, an operation in which coal is heated to 1,100°C using a coke furnace, and volatile components in the coal are gasified to obtain char or coke. The coal carbonizing gas is a gas generated when coal is carbonized and includes hydrogen gas, methane gas, and CO gas. The coal carbonizing gas contains approximately H₂: 50 vol%, CH₄: 30 vol%, and CO: 8 vol%.

The method for producing direct reduction iron according to the fourth embodiment includes the coal carbonization step S7, and thus a reducing gas and a cooling gas can be produced within the system.

Furthermore, when the type of coal is changed, it is possible to adjust the ratio of the hydrogen gas or the like in the coal carbonizing gas. For example, if coal has a lower rank of coalification such as lignite, the content of hydrogen gas is higher. Therefore, when the type of coal is adjusted, it is possible to supply both the reducing gas and the cooling gas only from the coal carbonizing gas.

### (Method for producing direct reduction iron according to fifth embodiment)

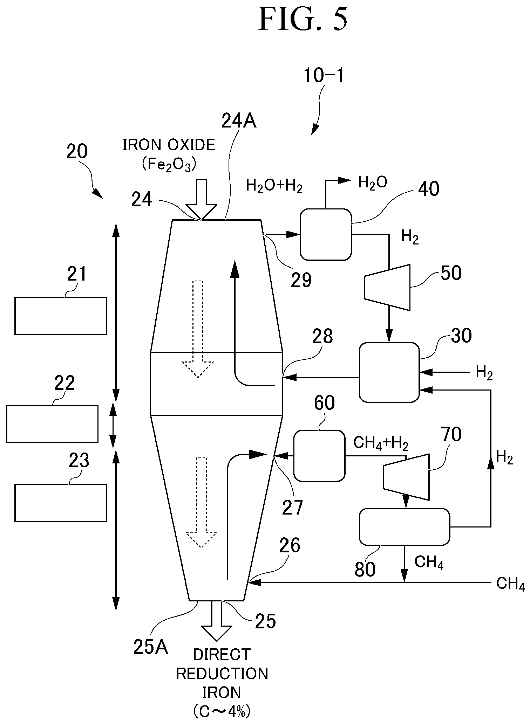

A method for producing direct reduction iron of the present invention is preferably performed using a single shaft furnace. As shown in FIG. 5, a shaft furnace includes, in order from a bottom 25A, a direct reduction iron discharging unit 25 that discharges the carbonized and cooled direct reduction iron to the bottom 25A, a cooling gas inlet 26, a cooling gas outlet 27, a reducing gas inlet 28, a reducing gas outlet 29, and a raw material charging unit 24 that charges a raw material, which is the iron oxide, to a top 24A.

The cooling step S2 is performed in the cooling zone between the cooling gas inlet 26 and the cooling gas outlet 27. In the cooling step S2, in the cooling zone between the cooling gas inlet 26 and the cooling gas outlet 27, the direct reduction iron is carbonized and cooled using the cooling gas. In the reduction zone between the reducing gas inlet 28 and the reducing gas outlet 29, the reduction step S1 is performed. In the reduction step S1, in the reduction zone between the reducing gas inlet 28 and the reducing gas outlet 29, an iron oxide raw material is reduced by a reducing gas (hydrogen gas) to generate direct reduction iron.

Specifically, in an embodiment using a shaft furnace, while heated hydrogen gas is blown from the lower part of the reduction zone, methane gas is blown from the lower part of the cooling zone. Iron oxide, which is a raw material charged from the upper part of the shaft furnace, descends while being reduced by hydrogen gas in the reduction zone.

On the other hand, hydrogen gas rises while reducing iron oxide. Unreacted hydrogen gas and water (water vapor) generated by reduction of iron oxide are extracted from the upper part of the reduction zone as a reduced exhaust gas. The reduced exhaust gas is cooled and separated into hydrogen gas and water (liquid). Hydrogen gas is circulated as a reducing gas.

In the cooling zone, the direct reduction iron descends while being cooled and carbonized by methane gas. Then, the partially carbonized direct reduction iron is discharged from the lower part of the cooling zone. On the other hand, methane gas rises while carbonizing direct reduction iron. In this case, hydrogen gas is generated by a reaction between direct reduction iron and methane gas. The cooling exhaust gas, which is a mixed gas containing hydrogen gas and unreacted methane gas, is extracted from the upper part of the cooling zone. The cooling exhaust gas is separated into hydrogen gas and methane gas. Methane gas is circulated as a cooling gas, and hydrogen gas is circulated as a reducing gas.

In addition to the method for producing direct reduction iron of the present invention that is performed using one shaft furnace in a reduction zone and a cooling zone in a divided manner as described above, the method can be performed using two shaft furnaces in series, and can be performed using one shaft furnace in two stages as shown in examples. In addition, the method can be performed using a multi-stage fluid bed without being limited to a shaft furnace.

### <2. Configuration of direct reduction system>

Hereinafter, with reference to FIG. 5, a method performed using a single shaft furnace in a reduction zone and a cooling zone in a divided manner will be described in detail. FIG. 5 is a diagram showing a configuration of a direct reduction system 10-1 according to the present embodiment. The direct reduction system 10-1 is a system for implementing the method for producing direct reduction iron according to the present embodiment, and includes a shaft furnace 20, a heating furnace 30, a cooling device 40, a compressor 50, a cooling device 60, a compressor 70, and a separating device 80. The shaft furnace 20 includes the above raw material charging unit 24, the direct reduction iron discharging unit 25, the cooling gas inlet 26, the cooling gas outlet 27, the reducing gas inlet 28 and the reducing gas outlet 29.

The shaft furnace 20 is divided into a reduction zone 21, a transition zone 22, and a cooling zone 23. The reduction zone 21 is an area between the center of the reducing gas inlet 28 and the center of the reducing gas outlet 29 and is an area in which an iron oxide raw material is reduced to iron. The transition zone 22 is an area between the center of the cooling gas outlet 27 and the center of the reducing gas inlet 28 and is a material seal area that separates the reduction zone and the cooling zone. The cooling zone 23 is an area between the center of the cooling gas inlet 26 and the center of the cooling gas outlet 27 and is an area in which the direct reduction iron generated in the reduction zone is cooled while carbonizing.

In the reduction zone 21, heated hydrogen gas is blown in as a reducing gas from the reducing gas inlet 28 in the lower part of the reduction zone. Hydrogen gas includes a gas supplied from the outside of the system as well as a gas circulated in a step to be described below. Hydrogen gas supplied from the outside of the system is, for example, hydrogen gas produced by water electrolysis.

Iron oxide as a raw material is charged from the raw material charging unit 24 at the top of the shaft furnace 20. Iron oxide is reduced by hydrogen gas while descending within the reduction zone 21 and becomes direct reduction iron.

A mixed gas containing unreacted hydrogen gas and water (water vapor) generated by reduction of iron oxide is extracted from the reducing gas outlet 29 in the upper part of the reduction zone 21. Direct reduction iron descends from the reduction zone 21 to the cooling zone 23 through the transition zone 22.

In the cooling zone 23, methane gas is blown in as a cooling gas from the cooling gas inlet 26 in the lower part of the cooling zone 23 (cooling gas blowing step).

On the other hand, methane gas rises while carbonizing direct reduction iron direct reduction iron. Hydrogen gas is generated by a reaction between direct reduction iron and methane gas. A cooling exhaust gas composed of hydrogen gas and unreacted methane gas is extracted from the cooling gas outlet 27 in the upper part of the cooling zone (cooling exhaust gas extraction step).

The heating furnace 30 heats hydrogen gas and then blows it to the lower part of the reduction zone 21. The cooling device 40 cools the reduced exhaust gas (a mixed gas containing unreacted hydrogen gas and water (water vapor) generated by reduction of iron oxide) extracted from the upper part of the reduction zone 21 and dehydrates it and separates hydrogen gas (the dehydration step S3). Hydrogen gas is compressed by the compressor 50 and then introduced into the heating furnace 30. That is, hydrogen gas is circulated as a reducing gas.

The cooling exhaust gas extracted from the upper part of the cooling zone (a mixed gas containing hydrogen gas and unreacted methane gas generated in the cooling zone) is cooled by the cooling device 60. The cooling exhaust gas is then compressed by the compressor 70. The cooling exhaust gas is then introduced into the separating device 80. The separating device 80 separates the cooling exhaust gas into hydrogen gas and methane gas by, for example, a membrane separation method (the separation step S4). Methane gas is circulated as a cooling gas, and hydrogen gas is circulated as a reducing gas. That is, methane gas is blown into the lower part of the cooling zone 23, and hydrogen gas is introduced into the heating furnace 30.

### <3. Method for producing direct reduction iron according to present embodiment>

Next, a method for producing direct reduction iron using the above direct reduction system 10-1 will be described. First, hydrogen gas is heated in the heating furnace 30 and then introduced into the lower part of the reduction zone 21. The temperature of hydrogen gas is approximately 700 to 1,000°C. In addition, the blowing amount of hydrogen gas is approximately 1,000 to 2,200 Nm³/t-DRI. On the other hand, iron oxide as a raw material is charged from the upper part of the reduction zone 21. Iron oxide is reduced by hydrogen gas while descending within the reduction zone 21 and becomes direct reduction iron. Hydrogen gas reduces iron oxide while rising in the reduction zone 21. The chemical reaction formula in this case is represented by the above Formula (1). The degree of metallization is approximately 65 to 98%.

The reduced exhaust gas, which is a mixed gas containing unreacted hydrogen gas and water (water vapor) generated by reduction of iron oxide, is extracted from the upper part of the reduction zone 21. The cooling device 40 cools the reduced exhaust gas extracted from the upper part of the reduction zone 21 and separates it into water (liquid) and hydrogen gas. Hydrogen gas is compressed by the compressor 50 and then introduced into the heating furnace 30. That is, hydrogen gas is circulated as a reducing gas.

On the other hand, direct reduction iron descends into the cooling zone 23 through the transition zone 22. Methane gas is blown in as a cooling gas from the lower part of the cooling zone 23 (cooling gas blowing step). The temperature of the methane gas is approximately 0 to 100°C, and the blowing amount is more than 0 Nm³/t-DRI and 400 Nm³/t-DRI or less. In the cooling zone 23, the direct reduction iron descends while being cooled and carbonized by methane gas.

Then, the carbonized direct reduction iron is discharged from the lower part of the cooling zone. The degree of metallization of the direct reduction iron is approximately 70 to 98%, and the amount of carbon contained in the direct reduction iron based on the total mass of the direct reduction iron is approximately more than 0 mass% and 4.5 mass% or less.

On the other hand, methane gas rises while carbonizing direct reduction iron. Hydrogen gas is generated by a reaction between direct reduction iron and methane gas. The cooling exhaust gas composed of hydrogen gas and unreacted methane gas is extracted from the upper part of the cooling zone 23 (cooling exhaust gas extraction step).

The cooling exhaust gas extracted from the upper part of the cooling zone 23 is cooled by the cooling device 60 (cooling step). The cooling exhaust gas is then compressed by the compressor 70. The cooling exhaust gas is then introduced into the separating device 80. The separating device 80 separates the cooling exhaust gas into hydrogen gas and methane gas by, for example, a membrane separation method (separation step). The pressure during the separation step is approximately 1.0 to 2.0 MPa, and the temperature is 0 to 100°C. Methane gas is circulated as a cooling gas, and hydrogen gas is circulated as a reducing gas. That is, methane gas is blown into the lower part of the cooling zone 23, and hydrogen gas is introduced into the heating furnace 30.

As described above, according to the present embodiment, even when a reducing gas containing hydrogen gas is used as a reducing gas in a shaft furnace, it is possible to carburize direct reduction iron. In addition, since methane gas separated in the separation step is circulated as a cooling gas, methane gas can be efficiently used. In addition, since hydrogen gas separated in the separation step is blown into the reduction zone 21, hydrogen gas can be efficiently used. In addition, the amount of CO₂ generated is zero.

In addition, since methane gas is used as a cooling gas, the amount of the cooling gas is reduced due to an endothermal reaction of methane gas. As a result, the compressor 70 can be downsized. In addition, since hydrogen gas generated in the system is circulated as a reducing gas, it is possible to reduce the amount of hydrogen gas supplied from outside the system. In addition, when direct reduction iron is carbonized, it is possible to prevent reoxidation of direct reduction iron. In addition, since direct reduction iron contains carbon, energy consumption in the electric furnace is reduced (dissolution of direct reduction iron in an electric furnace is promoted, and a small amount of carbon rapidly increases the solubility).

### [Examples]

Next, examples of the present embodiment will be described. In the following examples, the reduction step and the cooling step were separately performed using an adiabatic countercurrent moving bed shaft furnace simulator with a height of 4 m and a diameter of 100 mmΦ (hereinafter referred to as a shaft-type test device, and simply a device) described in Non-Patent Document 2. Here, examples to be described below are examples of the present invention, and the present invention is not limited to the following examples.

### (Example 1)

In Example 1, using a shaft-type test device, as an iron oxide raw material, acidic pellets produced in Brazil (iron content: 65.9%, SiO₂: 3.1 %) were supplied from the top, and the following reduction treatment was performed. Here, the top indicates the uppermost part of the device. First, a gas having a composition shown in Table 1 (a mixed gas containing hydrogen gas, CO gas, and CO₂ gas) was blown from the lower part of the device. The lower part of the device was positioned 0.75 m above the bottom. In Table 1, Inlet indicates a composition of a gas (input gas) blown into the lower part of the device, and Outlet indicates a composition of a gas (output gas) discharged from the upper part of the device. The upper part of the device is any position within 0.25 m downward from the top of the device. Here, the numerical value of the composition in Table 1 and tables to be described below indicates volume% of each component with respect to the entire gas. In addition, the composition of the gas was measured using a gas chromatography mass spectrometer (GC/MS). Specifically, each gas was supplied to GC/MS, and components of each gas were continuously measured. The numerical value in the table indicates an average value thereof. The temperature of the input gas was 950°C, and the flow rate was 1,400 Nm³/t-DRI. The degree of metallization of the direct reduction iron discharged from the bottom of the device was 96%, and the amount of carbon in the direct reduction iron was 1.5 mass%. The bottom of the device indicates the lowermost part of the device. The amount of carbon was measured according to JIS G 1211-3, combustion-infrared absorption method.

**[Table 1]**

| | H₂ | H₂O | CO | CO₂ | CH₄ | Temp |
|---|---|---|---|---|---|---|
| | vol% | vol% | vol% | vol% | vol% | °C |
| Outlet | 40 | 33 | 14 | 13 | 0 | 680 |
| Inlet | 70 | 0 | 25 | 5 | 0 | 950 |

Next, the discharged direct reduction iron was supplied again from the top of the shaft-type test device, and a gas (methane gas) having a composition shown in Table 2A was blown from the lower part of the device. In Table 2A, Inlet indicates a composition of a gas (input gas) blown into the lower part of the device, and Outlet indicates a composition of a gas discharged from the upper part of the device. The temperature of the input gas was 25°C, and the flow rate was 150 Nm³/t-DRI. The degree of metallization of the direct reduction iron discharged from the bottom of the device was 97%, and the amount of carbon in the direct reduction iron was 4.5 mass%. The cooling exhaust gas was separated into hydrogen gas and methane gas using a separation membrane. The concentrations of the obtained separated gases are shown in Table 2B. The cooling exhaust gas was cooled and then separated. When the hydrogen gas obtained by separation was mixed with a reducing gas having a composition shown in Table 1 to reduce iron oxide, the degree of metallization of the direct reduction iron was 96%, and the amount of carbon in the direct reduction iron was 1.5 mass%. When methane gas obtained by separation in the same manner was mixed with a cooling gas shown in Table 2A and cooled, the degree of metallization of the direct reduction iron was 97%, and the amount of carbon in the direct reduction iron was 4.5 mass%. The amount of methane gas from the separation step in the cooling step based on the total volume of the cooling gas was 55 vol%, and the amount of newly introduced methane gas based on the total volume of the cooling gas was 45 vol%.

Since the separated gas was circulated for reduction and cooling, it was possible to reduce the amount of hydrogen that should normally be supplied for reduction, and effects of reducing the energy consumption rate and reducing costs were obtained.

**[Table 2A]**

| | H₂ | H₂O | CO | CO₂ | CH₄ | Temp |
|---|---|---|---|---|---|---|
| | vol% | vol% | vol% | vol% | vol% | °C |
| Outlet | 45 | 0 | 0 | 0 | 55 | 850 |
| Inlet | 0 | 0 | 0 | 0 | 100 | 25 |

**[Table 2B]**

| | H₂ | H₂O | CO | CO₂ | CH₄ | Temp |
|---|---|---|---|---|---|---|
| | vol% | vol% | vol% | vol% | vol% | °C |
| Outlet H₂ | 95 | 0 | 0 | 0 | 5 | 52 |
| Outlet CH₄ | 5 | 0 | 0 | 0 | 95 | 45 |
| Inlet | 45 | 0 | 0 | 0 | 55 | 35 |

As described above, according to Example 1, even when hydrogen gas (a gas mainly composed of hydrogen gas) was used as the reducing gas, it was possible to produce direct reduction iron with a carbon content of 4.5 mass%.

### (Example 2)

In Example 2, the same raw material as in Example 1 was used and the following reduction treatment was performed using a shaft-type test device. First, a gas having a composition shown in Table 3, that is, hydrogen gas (containing a small amount of nitrogen gas) was blown from the lower part of the device. In Table 3, Inlet indicates a composition of a gas (input gas) blown into the lower part of the device, and Outlet indicates a composition of a gas (output gas) discharged from the upper part of the device. The temperature of the input gas was 980°C, and the flow rate was 1,200 Nm³/t-DRI. The degree of metallization of the direct reduction iron discharged from the bottom of the device was 85%, and the amount of carbon in the direct reduction iron was less than 0.1 mass%.

**[Table 3]**

| | H₂ | H₂O | CO | CO₂ | N₂ | Temp |
|---|---|---|---|---|---|---|
| | vol% | vol% | vol% | vol% | vol% | °C |
| Outlet | 67 | 28 | 0 | 0 | 5 | 680 |
| Inlet | 95 | 0 | 0 | 0 | 5 | 980 |

Next, the discharged direct reduction iron was supplied again to the shaft-type test device, and a gas (methane gas) having a composition shown in Table 4A was blown from the lower part of the device. In Table 4A, Inlet indicates a composition of a gas (input gas) blown into the lower part of the device, and Outlet indicates a composition of a gas discharged from the upper part of the device. The temperature of the input gas was 30°C, and the flow rate was 250 Nm³/t-DRI. The degree of metallization of the direct reduction iron discharged from the bottom of the device was 90%, and the amount of carbon in the direct reduction iron was 4.0 mass%. Next, the cooling exhaust gas was separated into hydrogen gas and methane gas using a separation membrane. The concentrations of the obtained separated gases are shown in Table 4B. The cooling exhaust gas was cooled and then separated. When the obtained hydrogen gas was mixed with a reducing gas having a composition shown in Table 3 to reduce iron oxide, the degree of metallization of the direct reduction iron was 85%, and the amount of carbon in the direct reduction iron was less than 0.1 mass%. When methane gas obtained by separation in this manner was mixed with a cooling gas having a composition shown in Table 4A and cooled, the degree of metallization of the direct reduction iron was 90%, and the amount of carbon in the direct reduction iron was 4.0 mass%. The amount of methane gas from the separation step in the cooling step based on the total volume of the cooling gas was 46 vol%, and the amount of newly introduced methane gas based on the total volume of the cooling gas was 54 vol%.

Since the separated gas was circulated for reduction and cooling, it was possible to reduce the amount of hydrogen that should normally be supplied for reduction, and effects of reducing the energy consumption rate and reducing costs were obtained.

**[Table 4A]**

| | H₂ | H₂O | CO | CO₂ | CH₄ | Temp |
|---|---|---|---|---|---|---|
| | vol% | vol% | vol% | vol% | vol% | °C |
| Outlet | 54 | 0 | 0 | 0 | 46 | 800 |
| Inlet | 0 | 0 | 0 | 0 | 100 | 30 |

**[Table 4B]**

| | H₂ | H₂O | CO | CO₂ | CH₄ | Temp |
|---|---|---|---|---|---|---|
| | vol% | vol% | vol% | vol% | vol% | °C |
| Outlet H₂ | 99 | 0 | 0 | 0 | 1 | 58 |
| Outlet CH₄ | 1 | 0 | 0 | 0 | 99 | 50 |
| Inlet | 54 | 0 | 0 | 0 | 46 | 45 |

As described above, according to Example 2, even when hydrogen gas was used as the reducing gas, it was possible to produce direct reduction iron with a carbon content of 4.0 mass%.

### (Example 3)

In Example 3, the same raw material as in Example 1 was subjected to the following reduction treatment using a shaft-type test device. First, a gas having a composition shown in Table 5, that is, hydrogen gas (containing a small amount of nitrogen gas) was blown from the lower part of the device. In Table 5, Inlet indicates a composition of a gas (input gas) blown into the lower part of the device, and Outlet indicates a composition of a gas (output gas) discharged from the upper part of the device. The temperature of the input gas was 980°C, and the flow rate was 1,200 Nm³/t-DRI. The degree of metallization of the direct reduction iron discharged from the bottom of the device was 85%, and the amount of carbon in the direct reduction iron was less than 0.1 mass%.

**[Table 5]**

| | H₂ | H₂O | CO | CO₂ | N₂ | Temp |
|---|---|---|---|---|---|---|
| | vol% | vol% | vol% | vol% | vol% | °C |
| Outlet | 67 | 28 | 0 | 0 | 5 | 680 |
| Inlet | 95 | 0 | 0 | 0 | 5 | 980 |

Next, the discharged direct reduction iron was supplied again to the shaft-type test device, and a gas (CO gas) having a composition shown in Table 6A was blown from the lower part of the device. In Table 6A, Inlet indicates a composition of a gas (input gas) blown into the lower part of the device, and Outlet indicates a composition of a gas discharged from the upper part of the device. The temperature of the input gas was 30°C, and the flow rate was 200 Nm³/t-DRI. The degree of metallization of the direct reduction iron discharged from the bottom of the device was 90%, and the amount of carbon in the direct reduction iron was 3.5 mass%. The cooling exhaust gas was separated into CO gas and CO₂ gas using a separation membrane. The concentrations of the obtained separated gases are shown in Table 6B. The cooling exhaust gas was cooled and then separated. When CO obtained by separation was mixed with a cooling gas having a composition shown in Table 6A and the direct reduction iron was cooled, the degree of metallization of the direct reduction iron was 90%, and the amount of carbon in the direct reduction iron was 3.5 mass%. The amount of CO gas from the separation step in the cooling step based on the total volume of the cooling gas was 55 vol%, and the amount of newly introduced CO gas based on the total volume of the cooling gas was 45 vol%.

Since the separated gas was circulated and cooled, it was possible to reduce the amount of CO that should normally be supplied for reduction, and effects of reducing the energy consumption rate and reducing costs were obtained.

**[Table 6A]**

| | H₂ | H₂O | CO | CO₂ | CH₄ | Temp |
|---|---|---|---|---|---|---|
| | vol% | vol% | vol% | vol% | vol% | °C |
| Outlet | 0 | 0 | 55 | 45 | 0 | 700 |
| Inlet | 0 | 0 | 100 | 0 | 0 | 30 |

**[Table 6B]**

| | H₂ | H₂O | CO | CO₂ | CH₄ | Temp |
|---|---|---|---|---|---|---|
| | vol% | vol% | vol% | vol% | vol% | °C |
| Outlet CO | 0 | 0 | 99 | 1 | 0 | 43 |
| Outlet CO₂ | 0 | 0 | 1 | 99 | 0 | 38 |
| Inlet | 0 | 0 | 55 | 45 | 0 | 30 |

As described above, according to Example 3, even when hydrogen gas was used as the reducing gas, it was possible to produce direct reduction iron with a carbon content of 3.5 mass%.

### (Example 4)

In Example 4, the same raw material as in Example 1 was subjected to the following reduction treatment using a shaft-type test device. First, a gas having a composition shown in Table 7, that is, hydrogen gas (containing a small amount of nitrogen gas) was blown from the lower part of the device. In Table 7, Inlet indicates a composition of a gas (input gas) blown into the lower part of the device, and Outlet indicates a composition of a gas (output gas) discharged from the upper part of the device. The temperature of the input gas was 980°C, and the flow rate was 1,200 Nm³/t-DRI. The degree of metallization of the direct reduction iron discharged from the lower part of the device was 85%, and the amount of carbon in the direct reduction iron was less than 0.1 mass%.

**[Table 7]**

| | H₂ | H₂O | CO | CO₂ | N₂ | Temp |
|---|---|---|---|---|---|---|
| | vol% | vol% | vol% | vol% | vol% | °C |
| Outlet | 67 | 28 | 0 | 0 | 5 | 680 |
| Inlet | 95 | 0 | 0 | 0 | 5 | 980 |

Next, the discharged direct reduction iron was supplied again to the shaft-type test device, and a gas (a mixed gas containing methane gas and CO gas) having a composition shown in Table 8A was blown from the lower part of the device. In Table 8A, Inlet indicates a composition of a gas (input gas) blown into the lower part of the device, and Outlet indicates a composition of a gas discharged from the upper part of the device. The temperature of the input gas was 30°C, and the flow rate was 150 Nm³/t-DRI. The degree of metallization of the direct reduction iron discharged from the bottom of the device was 91%, and the amount of carbon in the direct reduction iron was 3.0 mass%. The cooling exhaust gas was separated into hydrogen gas, CO gas, CO₂ gas, and methane gas using a separation membrane. The concentrations of the obtained separated gases are shown in Table 8B. The cooling exhaust gas was cooled and then separated. When the cooling exhaust gas was cooled, H₂O became liquid water and was separated. When the separated hydrogen gas was introduced into a reducing gas having a composition shown in Table 7A to reduce iron oxide, the degree of metallization of the direct reduction iron was 85%, and the amount of carbon in the direct reduction iron was less than 0.1 mass%. When a mixed gas containing CO gas and methane gas obtained by separation was mixed with a gas having a composition shown in Table 8A and the direct reduction iron was cooled, the degree of metallization of the direct reduction iron was 91%, and the amount of carbon in the direct reduction iron was 3.0 mass%. The amount of the mixed gas obtained in the separation step based on the total volume of the cooling gas was 55 vol%, and the amount of the newly introduced mixed gas shown in Table 8A based on the total volume of the cooling gas was 45 vol%.

Since the separated gas was circulated for reduction and cooling, it was possible to reduce the amount of CO that should normally be supplied for reduction, and effects of reducing the energy consumption rate and reducing costs were obtained.

**[Table 8A]**

| | H₂ | H₂O | CO | CO₂ | CH₄ | Temp |
|---|---|---|---|---|---|---|
| | vol% | vol% | vol% | vol% | vol% | °C |
| Outlet | 20 | 5 | 30 | 25 | 20 | 750 |
| Inlet | 0 | 0 | 50 | 0 | 50 | 30 |

**[Table 8B]**

| | H₂ | H₂O | CO | CO₂ | CH₄ | Temp |
|---|---|---|---|---|---|---|
| | vol% | vol% | vol% | vol% | vol% | °C |
| Outlet H₂ | 97 | 0 | 2 | 0 | 1 | 43 |
| Outlet CH₄+CO | 1 | 0 | 54 | 0 | 45 | 38 |
| Outlet CO₂ | 0 | 0 | 1 | 98 | 1 | 32 |
| Inlet | 21 | 0 | 32 | 26 | 21 | 20 |

As described above, according to Example 4, even when hydrogen gas was used as the reducing gas, it was possible to produce direct reduction iron with a carbon content of 3.0 mass%.

While preferable embodiments of the present invention have been described above in detail with reference to the appended drawings, the present invention is not limited to these examples.

### [Brief Description of the Reference Symbols]

10-1 Direct reduction system
20 Shaft furnace
30 Heating furnace
40 Cooling device
50 Compressor
60 Cooling device
70 Compressor
80 Separating device

## Claims

1. A method for producing direct reduction iron, comprising:
a reduction step in which an iron oxide raw material is reduced by a reducing gas containing hydrogen gas to generate direct reduction iron;
a dehydration step in which water is removed from an exhaust gas in the reduction step and thus hydrogen gas is separated from the exhaust gas;
a cooling step in which the direct reduction iron is carbonized and cooled using a cooling gas containing carbon as an element; and
a separation step in which hydrogen gas and methane gas are separated from an exhaust gas in the cooling step,
wherein the cooling gas is methane gas,
wherein the reducing gas further contains the hydrogen gas separated in the dehydration step and the hydrogen gas separated in the separation step,
wherein the cooling gas further contains the methane gas separated in the separation step.

2. A method for producing direct reduction iron, comprising:
a reduction step in which an iron oxide raw material is reduced by a reducing gas containing hydrogen gas to generate direct reduction iron;
a dehydration step in which water is removed from an exhaust gas in the reduction step and thus hydrogen gas is separated from the exhaust gas;
a cooling step in which the direct reduction iron is carbonized and cooled using a cooling gas containing carbon as an element; and
a separation step in which CO gas and CO₂ are separated from an exhaust gas in the cooling step,
wherein the cooling gas contains CO gas,
wherein the reducing gas contains the hydrogen gas separated in the dehydration step, and
wherein the cooling gas further contains the CO gas separated in the separation step.

3. The method for producing direct reduction iron according to claim 2, further comprising
a carbon gasification step in which CO gas is produced by gasifying char or coke with CO₂ gas,
wherein the CO₂ gas provided in the carbon gasification step includes the CO₂ gas separated in the separation step, and
wherein the cooling gas is the CO gas produced in the carbon gasification step.

4. A method for producing direct reduction iron, comprising:
a reduction step in which an iron oxide raw material is reduced by a reducing gas containing hydrogen gas to generate direct reduction iron;
a dehydration step in which water is removed from an exhaust gas in the reduction step and thus hydrogen gas is separated from the exhaust gas;
a cooling step in which the direct reduction iron is carbonized and cooled using a cooling gas containing carbon as an element;
a second dehydration step in which water is separated from an exhaust gas in the cooling step;
a coal carbonization step in which coal is carbonized to produce a coal carbonizing gas; and
a single or plurality of separation steps in which hydrogen gas, a mixed gas containing CO gas and methane gas, and CO₂ gas are separated from the exhaust gas after the second dehydration step and the coal carbonizing gas,
wherein the reducing gas further contains the hydrogen gas separated in the dehydration step and the hydrogen gas separated in the separation step,
wherein the cooling gas is the mixed gas separated in the separation step, and
wherein, in the coal carbonization step, the coal carbonizing gas is produced using the CO₂ gas separated in the separation step.

5. The method for producing direct reduction iron according to any one of claims 1 to 4,
wherein a shaft furnace including, in order from a bottom, a direct reduction iron discharging unit that discharges the carbonized and cooled direct reduction iron to the bottom, a cooling gas inlet, a cooling gas outlet, a reducing gas inlet, a reducing gas outlet and a raw material charging unit that charges a raw material, which is the iron oxide, to a top is used,
wherein, in the reduction step, in a reduction zone between the reducing gas inlet and the reducing gas outlet, the raw material is reduced with the reducing gas to generate the direct reduction iron,
wherein, in the cooling step, in a cooling zone between the cooling gas inlet and the cooling gas outlet, the direct reduction iron is carbonized and cooled using the cooling gas.

## Patentansprüche

1. Ein Verfahren zur Herstellung von Direktreduktions-Eisen, umfassend:
einen Reduktionsschritt, bei dem ein Eisenoxid-Rohmaterial durch ein Reduktionsgas, das Wasserstoffgas enthält, reduziert wird, um Direktreduktions-Eisen zu erzeugen;
einen Entwässerungsschritt, bei dem Wasser aus einem Abgas in dem Reduktionsschritt entfernt wird, und dadurch Wasserstoffgas aus dem Abgas abgetrennt wird;
einen Kühlschritt, bei dem das Direktreduktions-Eisen karbonisiert und gekühlt wird, unter Verwendung eines Kühlgases, das Kohlenstoff als ein Element enthält, und
einen Abtrennschritt, bei dem Wasserstoffgas und Methangas aus einem Abgas im Kühlschritt abgetrennt werden,
wobei das Kühlgas Methangas ist,
wobei das Reduktionsgas ferner das Wasserstoffgas, das im Entwässerungsschritt abgetrennt wurde, und das Wasserstoffgas, das im Abtrennschritt abgetrennt wurde, enthält,
wobei das Kühlgas ferner das Methangas enthält, das im Abtrennschritt abgetrennt wurde.

2. Ein Verfahren zur Herstellung von Direktreduktions-Eisen, umfassend:
einen Reduktionsschritt, bei dem ein Eisenoxid-Rohmaterial durch ein Reduktionsgas, das Wasserstoffgas enthält, reduziert wird, um Direktreduktions-Eisen zu erzeugen;
einen Entwässerungsschritt, bei dem Wasser aus einem Abgas im Reduktionsschritt entfernt wird, und dadurch Wasserstoffgas aus dem Abgas abgetrennt wird;
einen Kühlschritt, bei dem das Direktreduktions-Eisen karbonisiert und gekühlt wird, unter Verwendung eines Kühlgases, das Kohlenstoff als ein Element enthält; und
einen Abtrennschritt, bei dem CO-Gas und CO₂ aus einem Abgas im Kühlschritt abgetrennt werden,
wobei das Kühlgas CO-Gas enthält,
wobei das Reduktionsgas das Wasserstoffgas enthält, das im Entwässerungsschritt abgetrennt wurde, und
wobei das Kühlgas ferner das CO-Gas enthält, das im Abtrennschritt abgetrennt wurde.

3. Das Verfahren zur Herstellung von Direktreduktions-Eisen gemäß Anspruch 2, ferner umfassend
einen Kohlenstoffvergasungsschritt, bei dem CO-Gas durch Vergasung von Holzkohle oder Koks mit CO₂-Gas erzeugt wird,
wobei das CO₂-Gas, das im Kohlenstoffvergasungsschritt bereitgestellt wurde, das CO₂-Gas beinhaltet, das im Abtrennschritt abgetrennt wurde, und
wobei das Kühlgas das CO-Gas ist, das im Kohlenstoffvergasungsschritt erzeugt wurde.

4. Ein Verfahren zur Herstellung von Direktreduktions-Eisen, umfassend:
einen Reduktionsschritt, bei dem ein Eisenoxid-Rohmaterial durch ein Reduktionsgas, das Wasserstoffgas enthält, reduziert wird, um Direktreduktions-Eisen zu erzeugen;
einen Entwässerungsschritt, bei dem Wasser aus einem Abgas in dem Reduktionsschritt entfernt wird und dadurch Wasserstoffgas aus dem Abgas abgetrennt wird;
einen Kühlschritt, bei dem das Direktreduktions-Eisen karbonisiert und gekühlt wird, unter Verwendung eines Kühlgases, das Kohlenstoff als ein Element enthält;
einen zweiten Entwässerungsschritt, bei dem Wasser aus einem Abgas im Kühlschritt abgetrennt wird;
einen Kohlekarbonisierungsschritt, bei dem Kohle karbonisiert wird, um ein Kohlekarbonisierungsgas zu erzeugen; und
einen oder eine Vielzahl von Abtrennschritten, bei denen Wasserstoffgas, ein Mischgas, das CO-Gas und Methangas enthält, und CO₂-Gas aus dem Abgas nach dem zweiten Entwässerungsschritt und Kohlekarbonisierungsgas abgetrennt werden,
wobei das Reduktionsgas ferner das Wasserstoffgas, das im Entwässerungsschritt abgetrennt wurde, und das Wasserstoffgas, das im Abtrennschritt abgetrennt wurde, enthält,
wobei das Kühlgas, das Mischgas ist, das im Abtrennschritt abgetrennt wurde, und
wobei im Kohlekarbonisierungsschritt das Kohlekarbonisierungsgas unter Verwendung des CO₂-Gases, das im Trennschritt abgetrennt wurde, erzeugt wird.

5. Das Verfahren zur Herstellung von Direktreduktions-Eisen gemäß einem der Ansprüche 1 bis 4,
wobei ein Schachtofen verwendet wird, der vom Boden aus in der Reihenfolge eine Direktreduktions-Eisen-Ableitungseinheit, die das karbonisierte und gekühlte Direktreduktions-Eisen zum Boden ableitet, einen Kühlgaseinlass, einen Kühlgasauslass, einen Reduktionsgaseinlass, einen Reduktionsgasauslass und eine Rohmaterialeinleitungseinheit, die ein Rohmaterial oben zuführt, das das Eisenoxid ist, beinhaltet,
wobei in dem Reduktionsschritt in einer Reduktionszone zwischen dem Reduktionsgaseinlass und dem Reduktionsgasauslass das Rohmaterial mit dem Reduktionsgas reduziert wird, um das Direktreduktions-Eisen zu erzeugen,
wobei im Kühlschritt in einer Kühlzone zwischen dem Kühlgaseinlass und dem Kühlgasauslass das Direktreduktions-Eisen unter Verwendung des Kühlgases karbonisiert und gekühlt wird.

## Revendications

1. Méthode pour produire du fer de réduction directe, comprenant :
une étape de réduction dans laquelle une matière première d'oxyde de fer est réduite par un gaz réducteur contenant de l'hydrogène gazeux pour générer du fer de réduction directe ;
une étape de déshydratation dans laquelle de l'eau est retirée d'un gaz d'échappement dans l'étape de réduction et donc de l'hydrogène gazeux est séparé du gaz d'échappement ;
une étape de refroidissement dans laquelle le fer de réduction directe est carbonisé et refroidi au moyen d'un gaz de refroidissement contenant du carbone en tant qu'élément ; et
une étape de séparation dans laquelle de l'hydrogène gazeux et du méthane gazeux sont séparés d'un gaz d'échappement dans l'étape de refroidissement,
dans laquelle le gaz de refroidissement est le méthane gazeux,
dans laquelle le gaz réducteur contient en outre l'hydrogène gazeux séparé dans l'étape de déshydratation et l'hydrogène gazeux séparé dans l'étape de séparation,
dans laquelle le gaz de refroidissement contient en outre le méthane gazeux séparé dans l'étape de séparation.

2. Méthode pour produire du fer de réduction directe, comprenant :
une étape de réduction dans laquelle une matière première d'oxyde de fer est réduite par un gaz réducteur contenant de l'hydrogène gazeux pour générer du fer de réduction directe ;
une étape de déshydratation dans laquelle de l'eau est retirée d'un gaz d'échappement dans l'étape de réduction et donc de l'hydrogène gazeux est séparé du gaz d'échappement ;
une étape de refroidissement dans laquelle le fer de réduction directe est carbonisé et refroidi au moyen d'un gaz de refroidissement contenant du carbone en tant qu'élément ; et
une étape de séparation dans laquelle du CO gazeux et du CO₂ sont séparés d'un gaz d'échappement dans l'étape de refroidissement,
dans laquelle le gaz de refroidissement contient du CO gazeux,
dans laquelle le gaz réducteur contient l'hydrogène gazeux séparé dans l'étape de déshydratation, et
dans laquelle le gaz de refroidissement contient en outre le CO gazeux séparé dans l'étape de séparation.

3. Méthode pour produire du fer de réduction directe selon la revendication 2, comprenant en outre
une étape de gazéification de carbone dans laquelle du CO gazeux est produit par gazéification de résidu carboné ou de coke avec du CO₂ gazeux,
dans laquelle le CO₂ gazeux fourni dans l'étape de gazéification de carbone inclut le CO₂ gazeux séparé dans l'étape de séparation, et
dans laquelle le gaz de refroidissement est le CO gazeux produit dans l'étape de gazéification de carbone.

4. Méthode pour produire du fer de réduction directe, comprenant :
une étape de réduction dans laquelle une matière première d'oxyde de fer est réduite par un gaz réducteur contenant de l'hydrogène gazeux pour générer du fer de réduction directe ;
une étape de déshydratation dans laquelle de l'eau est retirée d'un gaz d'échappement dans l'étape de réduction et donc de l'hydrogène gazeux est séparé du gaz d'échappement ;
une étape de refroidissement dans laquelle le fer de réduction directe est carbonisé et refroidi au moyen d'un gaz de refroidissement contenant du carbone en tant qu'élément ;
une deuxième étape de déshydratation dans laquelle de l'eau est retirée d'un gaz d'échappement dans l'étape de refroidissement ;
une étape de carbonisation de charbon dans laquelle du charbon est carbonisé pour produire un gaz de carbonisation de charbon ; et
une ou plusieurs étapes de séparation dans lesquelles de l'hydrogène gazeux, un mélange gazeux contenant du CO gazeux et du méthane gazeux, et du CO₂ gazeux sont séparés du gaz d'échappement après la deuxième étape de déshydratation et du gaz de carbonisation de charbon,
dans laquelle le gaz réducteur contient en outre l'hydrogène gazeux séparé dans l'étape de déshydratation et l'hydrogène gazeux séparé dans l'étape de séparation,
dans laquelle le gaz de refroidissement est le mélange gazeux séparé dans l'étape de séparation, et
dans laquelle, dans l'étape de carbonisation de charbon, le gaz de carbonisation de charbon est produit par utilisation du CO₂ gazeux séparé dans l'étape de séparation.

5. Méthode pour produire du fer de réduction directe selon l'une quelconque des revendications 1 à 4,
dans laquelle est utilisé un four à cuve comprenant, dans l'ordre en partant du bas, une unité d'évacuation de fer de réduction directe qui évacue le fer de réduction directe carbonisé et refroidi vers le bas, une entrée de gaz de refroidissement, une sortie de gaz de refroidissement, une entrée de gaz réducteur, une sortie de gaz réducteur et une unité de chargement de matière première qui charge une matière première, qui est l'oxyde de fer, vers le haut,
dans laquelle, dans l'étape de réduction, dans une zone de réduction entre l'entrée de gaz réducteur et la sortie de gaz réducteur, la matière première est réduite avec le gaz réducteur pour générer du fer de réduction directe,
dans laquelle, dans l'étape de refroidissement, dans une zone de refroidissement entre l'entrée de gaz de refroidissement et la sortie de gaz de refroidissement, le fer de réduction directe est carbonisé et refroidi au moyen du gaz de refroidissement.
